# EUROPÄISCHE PATENTANMELDUNG

(11) **EP 3 163 224 A1**
(43) Veröffentlichungstag der Anmeldung: **03.05.2017**
(21) Anmeldenummer: 16194207.3
(22) Anmeldetag: 17.10.2016
(51) Int. Cl.: F25B 41/06

(54) **VENTILEINRICHTUNG, INSBESONDERE EXPANSIONSVENTIL, FÜR EINE KLIMATISIERUNGSANLAGE**

(30) Priorität: 27.10.2015 DE 102015221002
(71) Anmelder: Mahle International GmbH, 70376 Stuttgart (DE)
(72) Erfinder: HUMBOLDT, Falk, 75328 Schömberg (DE); PAUL, Michael, 74343 Sachsenheim (DE)
(74) Vertreter: BRP Renaud & Partner mbB Rechtsanwälte Patentanwälte Steuerberater

(57) **Zusammenfassung**

Die Erfindung betrifft eine Ventileinrichtung (1), insbesondere Expansionsventil, für einen Klimakreislauf einer Klimatisierungsanlage,
- mit einem Ventilgehäuse (2), welches einen von einem Fluid (4) durchströmbaren Fluidkanal (3) begrenzt,
- mit einem im Fluidkanal (3) verstellbar angeordneten Verschlusskörper (6), wobei der Verschlusskörper (6) in einer Schließstellung eine im Fluidkanal (3) vorhandene und von einem Ventilsitz (5) eingefasste Ventilöffnung (8) verschließt und hierzu am Ventilsitz (5) anliegt und wobei der Verschlusskörper (6) in einer Offenstellung zum Freigeben der Ventilöffnung (8) im Abstand zum Ventilsitz (5) angeordnet ist,
- mit einem Verstellelement (9), mittels welchem der Verschlusskörper (6) zwischen der Offenstellung und der Schließstellung verstellbar ist,
- wobei am Verschlusskörper (6) und/oder am Ventilsitz (5) und/oder am Verstellelement (9) eine Geräuschreduktionseinrichtung (12) zur Reduzierung eines Betriebsgeräusches der Ventileinrichtung (1) beim Durchströmen mit dem Fluid (4) ausgebildet ist.

## Beschreibung

Die Erfindung betrifft eine Ventileinrichtung, insbesondere ein Expansionsventil, für einen Klimakreislauf einer Klimatisierungsanlage, sowie eine Klimatisierungsanlage mit einer solchen Ventileinrichtung.

Ventileinrichtungen, die als Expansionsventile in Klimatisierungsanlagen zum Einsatz kommen, sind aus dem Stand der Technik in vielfältiger Weise bekannt.

Als problematisch bei solchen Expansionsventilen erweist sich oftmals, dass beim Durchströmen der Ventilöffnung mit einem Kältemittel in der Kältemittel-Strömung kohärente Schwingungen hervorgerufen werden können, mit welcher eine unerwünschte Geräuschentwicklung der Ventileinrichtung einhergeht.

Vor diesem Hintergrund behandelt die EP 1764 568 A1 eine Ventileinrichtung mit Turbulenzerzeugungselementen, die für eine turbulente Anströmung der Ventilöffnung mit einem Kältemittel sorgen. Auf diese Weise soll das Auftreten von Gasblasen in dem flüssigen Kältemittel weitgehend oder sogar vollständig vermieden werden, wodurch das beim Passieren der Ventilöffnung erzeugte Strömungsgeräusch abgesenkt und homogenisiert werden soll.

Es ist eine Aufgabe der vorliegenden Erfindung, eine verbesserte Ausführungsform für eine Ventileinrichtung zu schaffen, die sich insbesondere durch ein reduziertes Betriebsgeräusch auszeichnet.

Diese Aufgabe wird durch den Gegenstand der unabhängigen Patentansprüche gelöst. Bevorzugte Ausführungsformen sind Gegenstand der abhängigen Patentansprüche.

Grundgedanke der Erfindung ist demnach, eine Ventileinrichtung im Bereich seiner mit einem Verschlusskörper verschließbaren Ventilöffnung mit einer Geräuschreduktionseinrichtung auszustatten. Die Anordnung einer solchen Geräuschreduktionseinrichtung im Bereich der Ventilöffnung führt dazu, dass dort auftretende Schwingungen im Verschlusskörper und im Verstellelement zum Verstellen des Verschlusskörpers, die in der Folge zu besagter Geräuschentwicklung führen, signifikant reduziert oder sogar vollständig unterbunden werden können. Im Ergebnis führt eine solche Schwingungsreduktion auch zur Minderung besagter Geräuschentwicklung.

Eine erfindungsgemäße Ventileinrichtung, insbesondere ein Expansionsventil, für einen Klimakreislauf einer Klimatisierungsanlage, umfasst ein Ventilgehäuse, welches einen von einem Fluid - insbesondere einem Kühl- oder Kältemittel - durchströmbaren Fluidkanal begrenzt. Im Fluidkanal ist relativ zum Ventilgehäuse verstellbar ein Verschlusskörper angeordnet. In einer Schließstellung verschließt der Verschlusskörper eine im Fluidkanal vorhandene und von einem Ventilsitz eingefasste Ventilöffnung und liegt hierzu am Ventilsitz an. Besagte Ventilöffnung kann bei geeigneter Dimensionierung des Fluidkanals, insbesondere mit im Bereich der Ventilöffnung verringertem Durchmesser, zusammen mit dem Ventilsitz und dem Verschlusskörper ein Expansionsventil ausbilden. In einer Offenstellung ist der Verschlusskörper zum Freigeben der Ventilöffnung im Abstand zum Ventilsitz angeordnet. Mittels eines Verstellelements kann der Verschlusskörper zwischen der Offenstellung und der Schließstellung verstellt werden. Hierzu kann das Verstellelement mit einer geeigneten Antriebseinrichtung, insbesondere mit einem elektrischen, hydraulischen oder pneumatischen Aktuator, antriebsverbunden sein.

Erfindungsgemäß ist an dem Verschlusskörper und/oder am Ventilsitz und/oder am Verstellelement eine Geräuschreduktionseinrichtung ausgebildet, die eine Reduzierung des Betriebsgeräusches der Ventileinrichtung beim Durchströmen mit dem Fluid bewirkt.

Zweckmäßig kann der Verschlusskörper als Verschlusskugel ausgebildet sein. Alternativ oder zusätzlich kann das Verstellelement als Steuerstößel ausgebildet sein. Beide Maßnahmen, für sich genommen oder in Kombination, erleichtern eine technische Realisierung der Ventileinrichtung als Expansionsventil mit reduziertem Fluidkanal-Durchmesser im Bereich der Ventilöffnung.

Bei einer bevorzugten Ausführungsform ist die Geräuschreduktionseinrichtung als Oberflächenstruktur mit einer Mehrzahl von in den Fluidkanal hinein abstehenden Erhebungen ausgebildet. Alternativ oder zusätzlich besitzt die Oberflächenstruktur eine Mehrzahl von auf der Oberfläche angeordneten Vertiefungen. In einer bevorzugten Variante können besagte Erhebungen und Vertiefungen in derselben Oberflächenstruktur, besonders bevorzugt abwechselnd nebeneinander, angeordnet sein. Die genannten Maßnahmen, für sich genommen oder in Kombination, bewirken eine besonders ausgeprägte Reduktion des von der Ventileinrichtung erzeugten Betriebsgeräusches.

Bei einer vorteilhaften Weiterbildung weisen die einzelnen Erhebungen eine Höhe von höchstens 1 mm, vorzugsweise von höchstens 0,2mm, besonders bevorzugt von im Wesentlichen 0,05 mm, auf. Experimentelle Untersuchungen haben gezeigt, dass Erhebungen mit einer solchen Höhe für eine besonders hohe Geräuschminderung des Betriebsgeräusches der Ventileinrichtung sorgen.

Bei einer anderen vorteilhaften Weiterbildung weisen die einzelnen Vertiefungen eine Tiefe von höchstens 1 mm, vorzugsweise von höchstens 0,2 mm, besonders bevorzugt von im Wesentlichen 0,05 mm, auf. Experimentelle Untersuchungen haben gezeigt, dass Vertiefungen mit einer solchen Tiefe für eine besonders hohe Geräuschminderung im Betrieb der Ventileinrichtung sorgen.

Bei einer anderen vorteilhaften Weiterbildung weist die Oberflächenstruktur eine laterale Ausdehnung zwischen 0,1 mm² und 1 mm² auf. Experimentelle Untersuchungen haben gezeigt, dass mit einer lateralen Ausdehnung der Oberflächenstrukturen im genannten Größenbereich eine besonders hohe Geräuschminderung im Betrieb der Ventileinrichtung einhergeht.

Bei einer vorteilhaften Weiterbildung der Erfindung ist die Oberflächenstruktur in einem dem Verschlusskörper zugewandten axialen Endabschnitt des Verstellelements auf dessen Umfangsseite angeordnet. Auch diese Maßnahme unterstützt die gewünschte Geräuschminderung.

Ferner haben Simulationsrechnungen auf überraschende Weise gezeigt, dass eine zusätzliche Geräuschreduzierung erzielt werden kann, wenn die erfindungswesentliche Oberflächenstrukturen sowohl am Ventilsitz als auch am Verstellelement ausgebildet sind, und zwar derart, dass die beiden Oberflächenstrukturen einander gegenüberliegen. In diesem Szenario wird der vom Fluid durchströmte Fluidkanal also beidseitig von der erfindungswesentlichen Oberflächenstruktur begrenzt, wodurch ein besonders ausgeprägter Dämpfungseffekt bewirkt werden kann.

Bei einer weiteren bevorzugten Ausführungsform ist die Oberflächenstruktur des Verschlusskörpers wenigstens teilweise in einem Oberflächenbereich angeordnet, welcher den Ventilsitz in der Schließstellung des Verschlusskörpers berührt.

Bei einer weiteren bevorzugten Ausführungsform, die mit der vorangehend erläuterten bevorzugten Ausführungsform kombiniert werden kann, ist die Oberflächenstruktur des Ventilsitzes wenigstens teilweise in einem Oberflächenbereich angeordnet, welcher den Verschlusskörper in der Schließstellung des Verschlusskörpers berührt.

Bei einer weiteren bevorzugten Ausführungsform weist der Ventilsitz in einem Längsschnitt entlang einer Verstellrichtung des Verstellelements einen ersten Sitzabschnitt auf, der in der Verstellrichtung in einen zweiten Sitzabschnitt übergeht. Im zweiten Sitzabschnitt verjüngt sich der Ventilsitz zur Realisierung der Ventileinrichtung als Expansionsventil vom ersten Sitzabschnitt weg, und zwar insbesondere konisch. Der Verschlusskörper liegt in der Schließstellung am zweiten Sitzabschnitt an, und der zweite Sitzabschnitt geht entlang der Verstellrichtung in einen dritten Sitzabschnitt über. Bei dieser Variante ist die Oberflächenstruktur an einer den Fluidkanal begrenzenden Innenumfangsseite an wenigstens einem der drei Sitzabschnitte ausgebildet. Besonders bevorzugt ist der Durchmesser des Fluidkanals im ersten und dritten Sitzabschnitt im Wesentlichen konstant.

Laboruntersuchungen haben weiterhin gezeigt, dass eine besonders starke Geräuschminderung erreicht werden kann, wenn besagte die Oberflächenstruktur der Geräuschreduktionseinrichtung in der Art einer aufgerauten Oberfläche realisiert ist.

Der Effekt der Geräuschminderung durch die Geräuschreduktionseinrichtung kann in besonders ausgeprägter Form realisiert werden, wenn die aufgeraute Oberfläche eine Rauheit Rz von mehr als 16 µm aufweist.

Gemäß einer vorteilhaften Weiterbildung ist die Oberflächenstruktur ringartig oder ringsegmentartig ausgebildet und erstreckt sich auf der Oberfläche des Verschlusskörpers umlaufend entlang einer Richtung senkrecht zur Verstellrichtung, umlaufend. Bevorzugt läuft die Oberflächenstruktur vollständig um.

Zur Verbesserung der Dichtwirkung des Verschlusselements in seiner Schließstellung wird bei einer weiteren bevorzugten Ausführungsform vorgeschlagen, in einem Oberflächenabschnitt des Verschlusskörpers, welcher in der Schließstellung des Verschlusskörpers am Ventilsitz anliegt, keine Oberflächenstruktur auszubilden. Derselbe Effekt einer verbesserten Dichtwirkung kann erzielt werden, indem in einem Oberflächenabschnitt des Ventilsitzes, an welchem der Verschlusskörper in seiner Schließstellung anliegt, keine Oberflächenstruktur ausgebildet wird.

Bei einer weiteren bevorzugten Ausführungsform ist die Mehrzahl von Erhebungen und/oder Vertiefungen rasterartig auf der Oberfläche angeordnet. Bei einer dazu alternativen, ebenfalls bevorzugten Ausführungsform ist die Mehrzahl von Erhebungen und/oder Vertiefungen unregelmäßig auf der Oberfläche verteilt. Beide Varianten, die auch miteinander kombiniert werden können, bewirken eine besonders effektive Geräuschdämpfung.

Zweckmäßig können die Erhebungen und/oder Vertiefungen in einer Draufsicht auf die Oberflächenstruktur im Wesentlichen rund oder im Wesentlichen längsförmig ausgebildet. Diese Maßnahme bewirkt eine besonders stark ausgeprägte Geräuschreduktion sein.

Besonders zweckmäßig können die Vertiefungen kraterartig oder trichterartig ausgebildet sein. Auch diese Maßnahme bewirkt eine besonders stark ausgeprägte Geräuschreduktion.

Die Erfindung betrifft weiterhin eine Klimatisierungsanlage, insbesondere für ein Kraftfahrzeug. Die Klimatisierungsanlage umfasst einen Klimakreislauf, in welchem eine voranstehend erläuterte Ventileinrichtung angeordnet ist. Vorteile der erfindungsgemäßen Ventileinrichtung übertragen sich somit auf die erfindungsgemäße Klimatisierungsanlage.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein Beispiel einer erfindungsgemäßen Ventileinrichtung in einem Längsschnitt,
- Fig. 2: eine Detaildarstellung der Figur 1 bei geöffnetem Ventil,
- Fig. 3: eine Detaildarstellung der Figur 1 bei geschlossenem Ventil,
- Fig. 4: eine Detaildarstellung der Figur 1, in welcher die erfindungswesentliche Geräuschreduktionseinrichtung gezeigt ist,
- Fig. 5: eine Darstellung, welche mögliche Ausbildungen der die Geräuschreduktionseinrichtung ausbildende Oberflächenstruktur zeigt.

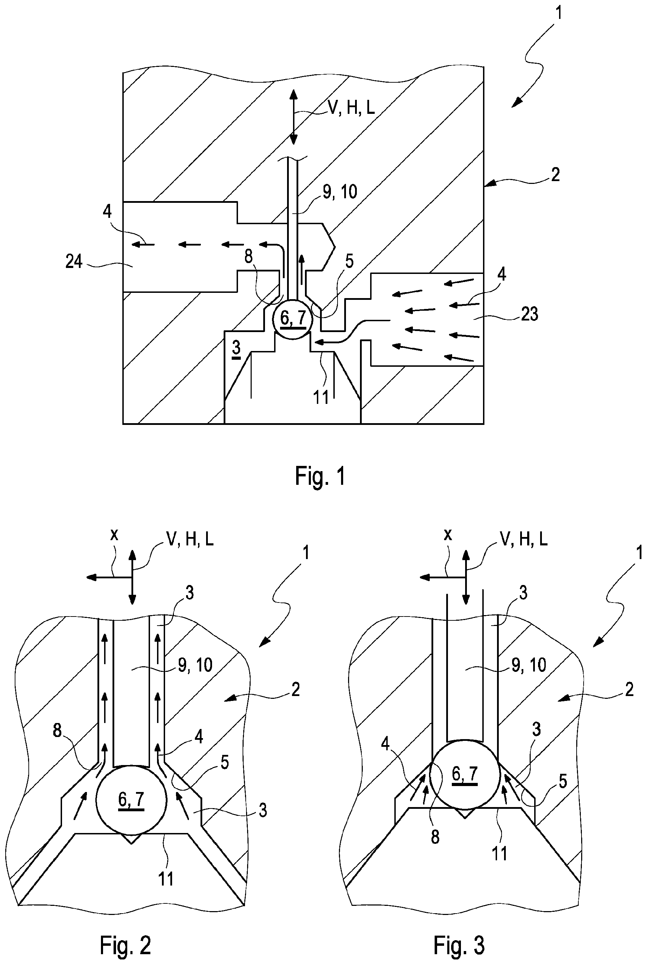

Figur 1 zeigt ein Beispiel einer erfindungsgemäßen Ventileinrichtung 1, welche als Expansionsventil für eine Klimatisierungsanlage eingesetzt werden kann, in einem Längsschnitt. Die Ventileinrichtung 1 umfasst ein Ventilgehäuse 2, welches einen von einem Fluid 4 durchströmbaren Fluidkanal 3 begrenzt. Im Ventilgehäuse 2 ist ein Fluideinlass 23 vorhanden, durch welchen das Fluid 4, typischerweise ein Kühl- oder Kältemittel der Klimatisierungsanlage, in den Fluidkanal 3 eingebracht werden kann. Durch einen am Ventilgehäuse 2 vorgesehenen Fluidauslass 24 wird das Fluid 4 wieder aus dem Fluidkanal 3 ausgeleitet.

Im Ventilgehäuse 2 bzw. im Fluidkanal 3 ist ein Ventilsitz 5 ausgebildet, der eine Ventilöffnung 8 einfasst. Im Fluidkanal 3 ist ferner ein Verschlusskörper 6 relativ zum Ventilgehäuse 2 verstellbar angeordnet, der vorzugsweise als Verschlusskugel 7 ausgebildet ist. Der Verschlusskörper 6 bzw. die Verschlusskugel 7 ist zwischen einer Schließstellung und einer Offenstellung verstellbar. In der Schließstellung liegt der Verschlusskörper 6 zum Verschließen der Ventilöffnung 8 am Ventilsitz 5 an, so dass kein Fluid 4 durch die Ventilöffnung 8 hindurchströmen kann. Diese Situation ist zur Verdeutlichung in separater Darstellung in Figur 3 gezeigt.

In der Offenstellung gibt der Verschlusskörper 6 die Ventilöffnung 8 zum Durchströmen mit dem Fluid 4 frei und ist hierzu im Abstand zum Ventilsitz 5 angeordnet. Diese Situation ist zur Verdeutlichung in separater Darstellung in Figur 2 gezeigt.

Die Verstellung des Verschlusskörpers 6 zwischen der Offenstellung und der Schließstellung erfolgt mit Hilfe eines Verstellelements 9, welches als Steuerstößel 10 ausgebildet sein kann. Das Verstellelement 9 ist entlang einer Verstellrichtung V im Fluidkanal 3 bewegbar, welche eine Hauptströmungsrichtung H des durch die Ventilöffnung 8 strömenden Fluids 4 sein kann. Die Verstellrichtung V kann identisch zu einer Längsrichtung L des Fluidkanals 3 sein. Das Verstellelement 9 wiederum kann mit einem pneumatischen oder hydraulischen oder elektrischen Aktuator (in den Figuren nicht gezeigt) antriebsverbunden sein. Das Verstellelement 9 bewegt den Verschlusskörper 6 durch mechanischen Kontakt zwischen der Offenstellung und der Schließstellung. Der Verschlusskörper 6 kann mit Hilfe eines Vorspannelements 11, beispielsweise in der Art eines federelastischen Elements, zum Verstellelement 9 hin vorgespannt sein. Im Beispiel der Figur 1 spannt das Vorspannelement 11 das Verstellelement 9 auch zum Ventilsitz 5 hin und somit in seine Schließstellung vor.

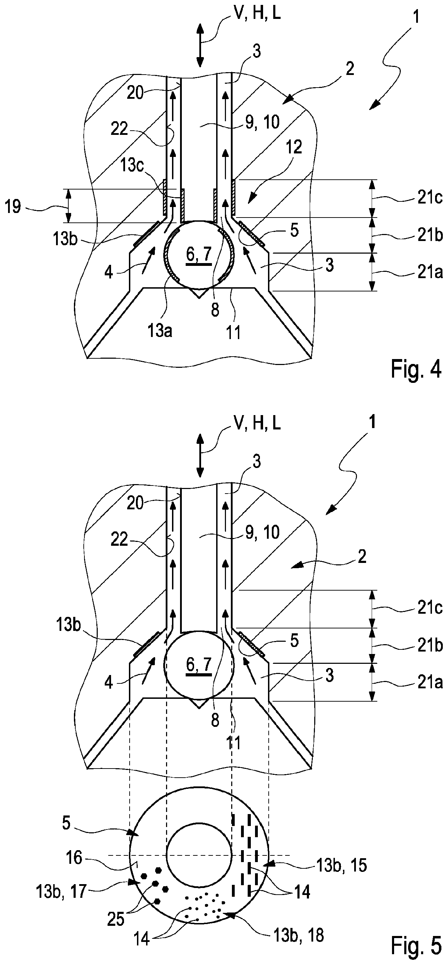

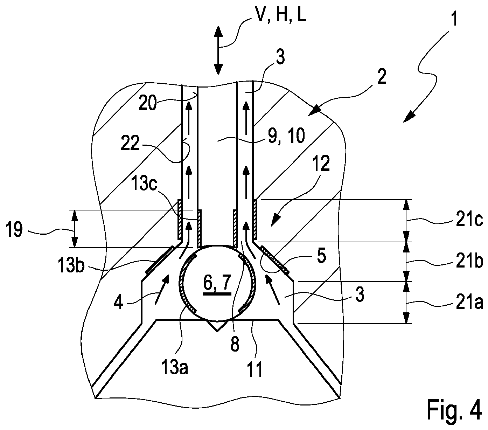

Die Ventileinrichtung 1 umfasst ferner eine Geräuschreduktionseinrichtung 12, mittels welcher Geräusche, insbesondere vibrationsartige Geräusche, die durch Schwingungen des Verschlusskörpers 7 sowie des Verstellelements 9 beim Durchströmen der Ventilöffnung 8 mit dem Fluid 4 erzeugt werden, gedämpft werden. Der Figur 4, welche die Ventileinrichtung in analoger Weise zu Figur 2 in einer Detaildarstellung im Bereich der Ventilöffnung 8 zeigt, entnimmt man, dass die Geräuschreduktionseinrichtung 12 am Verschlusskörper 6 und/oder am Ventilsitz 5 und/oder am Steuerstößel 10 und/oder an der Innenumfangsseite 22 des Fluidkanals 3 ausgebildet sein kann. In allen vier Fällen ist die Geräuschreduktionseinrichtung 12 als Oberflächenstruktur 13a, 13b, 13c mit einer Mehrzahl von Erhebungen 14 und, alternativ oder zusätzlich, mit einer Mehrzahl von Vertiefungen 25 ausgebildet.

Zur Verdeutlichung zeigt die Figur 5 zusätzlich zur Darstellung der Figur 4 eine Draufsicht auf den Ventilsitz 5 entlang der Verstellrichtung V des Verstellelements 9. Exemplarisch sind drei verschiedene Oberflächenstrukturen 13b gezeigt: Die zusätzlich mit 15 bezeichnete Oberflächenstruktur 13b umfasst eine Mehrzahl von Erhebungen 14, die rasterartig auf der Oberfläche 16 des Ventilsitzes 5 angeordnet sind und von der Oberfläche 16 in den Fluidkanal 3 hinein abstehen. Die Mehrzahl von Erhebungen 14 können aber auch unregelmäßig auf der Oberfläche 16 verteilt sein, wie dies exemplarisch für die zusätzlich mit 18 bezeichneten Oberflächenstrukturen 13b gezeigt ist. Die Erhebungen 14 können, wie bei der Oberflächenstruktur 15 gezeigt, längsförmig oder rund (nicht gezeigt) ausgebildet sein.

Anstelle von unregelmäßig angeordneten Erhebungen 14 können aber auch unregelmäßig angeordnete Vertiefungen 25 auf der Oberfläche 16 vorgesehen sein, wie dies in der zusätzlich mit 17 bezeichneten Oberflächenstruktur 13b der Fall ist. Die Vertiefungen 25 können dabei krater- oder trichterförmig ausgebildet sein. In einer in den Figuren nicht gezeigten Variante können die Vertiefungen 25 auch regelmäßig angeordnet sein.

Die Erhebungen 14 der Oberflächenstruktur 17 unterscheiden sich von den Erhebungen 14 der Oberflächenstruktur 18 darin, dass erstere kraterartig oder trichterartig mit individueller Geometrie und letztere rund mit jeweils identischer Geometrie ausgebildet sind. Denkbar ist auch eine Kombination der voranstehend genannten Beispiele, so etwa eine Kombination rasterartig angeordneter Erhebungen 14 mit jeweils runden oder kraterartigen Erhebungen 14 (nicht gezeigt). Anstelle einer runden Geometrie, wie für die Erhebungen 14 der Oberflächenstruktur 18 gezeigt, ist eine längsförmige Ausbildung, wie für die Erhebungen 14 der Oberflächenstruktur 15 dargestellt, möglich.

Alle vorangehen beschriebenen Beispiele für Erhebungen 14 gelten nicht nur für Erhebungen 14, die von der Oberfläche 16 weg in den Fluidkanal 3 abstehen, sondern auch für in der Oberfläche 16 vorgesehene Vertiefungen 25, und umgekehrt. Auch eine Kombination aus Vertiefungen 25 und Erhebungen 14 ist denkbar.

Vorzugsweise weisen die einzelnen Erhebungen 14 eine Höhe von höchstens 1 mm, vorzugsweise von höchstens 0,2 mm, besonders bevorzugt von im Wesentlichen 0,05 mm, auf. In entsprechender Weise weisen die Vertiefungen 25 eine Tiefe von höchstens 1 mm, vorzugsweise von höchstens 0,2 mm, besonders bevorzugt von im Wesentlichen 0,05 mm, auf. Die Höhe bzw. Tiefe wird dabei entlang einer Richtung senkrecht zur Oberfläche 16 gemessen.

Die vorangehenden Erläuterungen für mögliche Ausbildungen der Oberflächenstruktur 13b am Ventilsitz 5 gelten mutatis mutandis auch für die Oberflächenstrukturen 13a, 13c am Verschlusskörper 6 bzw. am Verstellelement 9.

Die auf der Oberfläche des Verstellelements 9 bzw. des Steuerstößels 10 vorgesehene Oberflächenstruktur 13c ist in einem dem Verschlusskörper 6 zugewandten axialen Endabschnitt 19 des Verstellelements 9 bzw. des Steuerstößels 10 auf dessen Umfangsseite 20 angeordnet.

Im Beispielszenario ist die Oberflächenstruktur 13a des Verschlusskörpers 6 wenigstens teilweise in einem Oberflächenbereich des Verschlusskörpers 6 angeordnet, welcher den Ventilsitz 5 in der Schließstellung des Verschlusskörpers 6 berührt. In analoger Weise ist die Oberflächenstruktur 13b des Ventilsitzes 5 wenigstens teilweise in einem Oberflächenbereich angeordnet, welcher den Verschlusskörper 6 in der Schließstellung des Verschlusskörpers 6 berührt. Alternativ dazu können am Verschlusskörper 6 und/oder am Ventilsitz 5 in denjenigen Oberflächenabschnitten, die einander in der Schließkörper 6 berühren, keine Oberflächenstrukturen 13a, 13b ausgebildet sein, um eine damit etwaig verbundene, unerwünschte Minderung der Dichtwirkung des Verschlusskörpers 6 auszuschließen.

Der Ventilsitz 5 weist in dem in den Figuren gezeigten Längsschnitt entlang der Verstellrichtung V des Verstellelements 9 einen ersten Sitzabschnitt 21 a auf, der in der Verstellrichtung V in einen zweiten Sitzabschnitt 21 b übergeht. Der erste Sitzabschnitt 21 a kann einen entlang der Verstellrichtung V konstanten Durchmesser aufweisen. Der zweite Sitzabschnitt 21 b verjüngt sich vom ersten Sitzabschnitt 21 a weg konisch. In seiner Schließstellung liegt der Verschlusskörper 6 bzw. die Verschlusskugel am Ventilsitz 5 an. Der zweite Sitzabschnitt 21 b geht entlang der Verstellrichtung V vom ersten Sitzabschnitt 21 a weg in einen dritten Sitzabschnitt 21 c über, welcher entlang der Verstellrichtung V einen konstanten Durchmesser aufweisen kann. Die die Geräuschreduktionseinrichtung 12 ausbildende Oberflächenstruktur 13b des Ventilsitzes 5 kann auf einer den Fluidkanal 3 begrenzenden Innenumfangsseite 22 an wenigstens einem der drei Sitzabschnitte 21 a, 21 b, 21 c ausgebildet sein. Im Beispiel der Figur 4 ist die Oberflächenstruktur 13b exemplarisch im zweiten und dritten Sitzabschnitt 21 b, 21 c gezeigt. Die am dritten Sitzabschnitt 21 c des Ventilsitzes 5 an der Innenumfangsseite 22 des Fluidkanals 3 ausgebildete Oberflächenstruktur 13b liegt der auf einer Umfangsseite 20 des Verstellelements 9 ausgebildeten Oberflächenstruktur 13c gegenüber. Die auf dem Verschlusskörper 6 ausgebildete Oberflächenstruktur 13a kann ringartig oder ringsegmentartig ausgebildet sein und sich auf der Oberfläche des Verschlusskörpers 6 entlang einer Richtung X senkrecht zur Verstellrichtung V, vorzugsweise vollständig, umlaufend erstrecken.

Die Oberflächenstrukturen 13a, 13b, 13c mit den Erhebungen 14 und/oder Vertiefungen 25 können in der Art einer aufgerauten Oberfläche realisiert sein, die eine Rauheit Rz von mehr als 16 µm aufweist.

## Patentansprüche

1. Ventileinrichtung (1), insbesondere Expansionsventil, für einen Klimakreislauf einer Klimatisierungsanlage,
- mit einem Ventilgehäuse (2), welches einen von einem Fluid (4) durchströmbaren Fluidkanal (3) begrenzt,
- mit einem im Fluidkanal (3) verstellbar angeordneten Verschlusskörper (6), wobei der Verschlusskörper (6) in einer Schließstellung eine im Fluidkanal (3) vorhandene und von einem Ventilsitz (5) eingefasste Ventilöffnung (8) verschließt und hierzu am Ventilsitz (5) anliegt und wobei der Verschlusskörper (6) in einer Offenstellung zum Freigeben der Ventilöffnung (8) im Abstand zum Ventilsitz (5) angeordnet ist,
- mit einem Verstellelement (9), mittels welchem der Verschlusskörper (6) zwischen der Offenstellung und der Schließstellung verstellbar ist,
- wobei am Verschlusskörper (6) und/oder am Ventilsitz (5) und/oder am Verstellelement (9) eine Geräuschreduktionseinrichtung (12) zur Reduzierung eines Betriebsgeräusches der Ventileinrichtung (1) beim Durchströmen mit dem Fluid (4) ausgebildet ist.

2. Ventileinrichtung nach Anspruch 1,
**dadurch gekennzeichnet, dass**
der Verschlusskörper (6) als Verschlusskugel (7) ausgebildet ist, und/oder dass das Verstellelement (9) als Steuerstößel (10) ausgebildet ist.

3. Ventileinrichtung nach Anspruch 1 oder 2,
**dadurch gekennzeichnet, dass**
die Geräuschreduktionseinrichtung (12) als Oberflächenstruktur (13a, 13b, 13c) mit einer Mehrzahl von in den Fluidkanal (3) hinein abstehenden Erhebungen (14) ausgebildet ist, und/oder dass
die Geräuschreduktionseinrichtung (12) als Oberflächenstruktur (13a, 13b, 13c) mit einer Mehrzahl von an der Oberfläche ausgebildeten Vertiefungen (25) ausgebildet ist.

4. Ventileinrichtung nach Anspruch 3,
**dadurch gekennzeichnet, dass**
die Erhebungen (14) eine Höhe von höchstens 1 mm, bevorzugt von höchstens 0,2 mm, besonders bevorzugt von im Wesentlichen 0,05 mm, aufweisen.

5. Ventileinrichtung nach Anspruch 3 oder 4,
**dadurch gekennzeichnet, dass**
die Vertiefungen (25) eine Tiefe von höchstens 1 mm, vorzugsweise von höchstens 0,2mm, besonders bevorzugt von im Wesentlichen 0,05mm, aufweisen.

6. Ventileinrichtung nach einem der Ansprüche 3 bis 5,
**dadurch gekennzeichnet, dass**
die Oberflächenstruktur (13a, 13b, 13c) eine laterale Ausdehnung zwischen 0,1 mm² und 1 mm² aufweist.

7. Ventileinrichtung nach einem der Ansprüche 3 bis 6,
**dadurch gekennzeichnet, dass**
die Oberflächenstruktur (13c) in einem dem Verschlusskörper (6) zugewandten axialen Endabschnitt (19) des Verstellelements (9) auf dessen Umfangsseite (20) angeordnet ist.

8. Ventileinrichtung nach einem der Ansprüche 3 bis 7,
**dadurch gekennzeichnet, dass**
die Oberflächenstruktur (13b, 13c) sowohl am Ventilsitz (5) als auch am Verstellelement (9) ausgebildet ist, derart, dass sich die beiden Oberflächenstrukturen (13b, 13c) gegenüberliegen.

9. Ventileinrichtung nach Ansprüche 3 bis 8,
**dadurch gekennzeichnet, dass**
die Oberflächenstruktur (13a) des Verschlusskörpers (6) wenigstens teilweise in einem Oberflächenbereich angeordnet ist, welcher den Ventilsitz (5) in der Schließstellung des Verschlusskörpers (6) berührt.

10. Ventileinrichtung nach einem der Ansprüche 3 bis 9,
**dadurch gekennzeichnet, dass**
die Oberflächenstruktur (13a, 13b, 13c) des Ventilsitzes (5) wenigstens teilweise in einem Oberflächenbereich angeordnet ist, welcher den Verschlusskörper (6) in der Schließstellung des Verschlusskörpers (6) berührt.

11. Ventileinrichtung nach einem der Ansprüche 3 bis 10,
**dadurch gekennzeichnet, dass**
- der Ventilsitz (5) in einem Längsschnitt entlang einer Verstellrichtung (V) des Verstellelements (9) einen ersten Sitzabschnitt (21 a) aufweist, der in der Verstellrichtung (V) in einen zweiten Sitzabschnitt (21 b) übergeht, in welchem sich der Ventilsitz (5) vom ersten Sitzabschnitt (21 a) weg, insbesondere konisch, verjüngt und an welchem der Verschlusskörper (6) in der Schließstellung anliegt,
- wobei der zweite Sitzabschnitt (21 b) entlang der Verstellrichtung (V) in einen dritten Sitzabschnitt (21 c) übergeht, und
- wobei die Oberflächenstruktur (13b) an einer den Fluidkanal (3) begrenzenden Innenumfangsseite (22) des Gehäuses (2) an wenigstens einem der drei Sitzabschnitte (21 a, 21 b, 21 c) ausgebildet ist.

12. Ventileinrichtung nach einem der Ansprüche 3 bis 11,
**dadurch gekennzeichnet, dass**
die Oberflächenstruktur (13a, 13b, 13c) in der Art einer aufgerauten Oberfläche realisiert ist.

13. Ventileinrichtung nach Anspruch 12,
**dadurch gekennzeichnet, dass**
die aufgeraute Oberfläche eine Rauheit von mehr als 16 µm aufweist.

14. Ventileinrichtung nach einem der Ansprüche 3 bis 13,
**dadurch gekennzeichnet, dass**
die am Verschlusskörper (6) vorgesehene Oberflächenstruktur (13a) ringartig oder ringsegmentartig ausgebildet ist und sich auf der Oberfläche des Verschlusskörpers (6) entlang einer Richtung (X) senkrecht zur Verstellrichtung (V), vorzugsweise vollständig, umlaufend erstreckt.

15. Ventileinrichtung nach einem der Ansprüche 3 bis 14,
**dadurch gekennzeichnet, dass**
das in einem Oberflächenabschnitt des Verschlusskörpers (6), welcher in der Schließstellung des Verschlusskörpers (6) am Ventilsitz (5) anliegt, keine Oberflächenstruktur (13a) ausgebildet ist, und/oder dass in einem Oberflächenabschnitt des Ventilsitzes (5), an welchem der Verschlusskörper (6) in seiner Schließstellung anliegt, keine Oberflächenstruktur (13b) ausgebildet ist.

16. Ventileinrichtung nach einem der Ansprüche 3 bis 15,
**dadurch gekennzeichnet, dass**
die Mehrzahl von Erhebungen (14) und/oder Vertiefungen (25) rasterartig auf der Oberfläche angeordnet ist.

17. Ventileinrichtung nach einem der Ansprüche 3 bis 16,
**dadurch gekennzeichnet, dass**
die Erhebungen (14) und/oder Vertiefungen (25) unregelmäßig auf der Oberfläche verteilt sind.

18. Ventileinrichtung nach einem der Ansprüche 3 bis 17,
**dadurch gekennzeichnet, dass**
die Erhebungen (14) und/oder Vertiefungen (25) in einer Draufsicht auf die Oberflächenstruktur (13a, 13b, 13c) im Wesentlichen rund und/oder im Wesentlichen längsförmig ausgebildet sind.

19. Ventileinrichtung nach einem der Ansprüche 3 bis 18,
**dadurch gekennzeichnet, dass**
die Vertiefungen (25) kraterartig oder trichterartig ausgebildet sind.

20. Klimatisierungsanlage, insbesondere für ein Kraftfahrzeug,
mit einem Klimakreislauf, in welchem eine Ventileinrichtung (1) nach einem der vorhergehenden Ansprüche angeordnet ist.
